(19) **Europäisches Patentamt**
**European Patent Office**
**Office européen des brevets**

(11) **EP 4 671 726 A1**

(12) **EUROPEAN PATENT APPLICATION**

(43) Date of publication:
**31.12.2025 Bulletin 2026/01**

(51) International Patent Classification (IPC):
**G01M 13/045** (2019.01)    **F16C 19/52** (2006.01)
**H02P 7/00** (2016.01)

(21) Application number: **24184864.7**

(22) Date of filing: **27.06.2024**

(52) Cooperative Patent Classification (CPC):
**G01M 13/045; F16C 19/527; H02P 7/00;**
B60L 2270/145

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **ABB SCHWEIZ AG**
**5400 Baden (CH)**

(72) Inventors:
• **KAKOSIMOS, Panagiotis**
**723 58 Västerås (SE)**
• **ALKKIOMAKI, Olli**
**00220 Helsinki (FI)**
• **AALTONEN, Teija**
**00940 Helsinki (FI)**

(74) Representative: **Kransell & Wennborg KB**
**P.O. Box 27834**
**115 93 Stockholm (SE)**

(54) **METHOD AND MEANS FOR PROLONGING SERVICE LIFE OF BEARINGS**

(57)    A method is disclosed for prolonging service life of a bearing in a powertrain comprising an electrical machine, the method being performed in a control device controlling operation of the powertrain, the method comprising:
- detecting (Si) that at least one feature of a signal of the electrical machine violates a threshold limit, and

- determining ($S_2$) a new operating area for the electrical machine in response to the detecting (Si) of the at least one feature violating the threshold limit.

The control device may alter operating conditions of the electrical machine to be within the new operating area.

Fig. 2

## Description

### TECHNICAL FIELD

The technology disclosed herein relates generally to bearings of powertrains comprising electrical machines, and in particular to means and methods for prolonging service life of a bearing in such a powertrain.

### BACKGROUND

Various methods exist for detecting faults in mechanical devices of powertrains comprising electrical motors, such as bearings. Many rely on analyzing temperature and acceleration signals, using sophisticated techniques to extract information and classify fault severity. Advanced signal analysis and decision-making processes, which always involve some uncertainty, are required. Valuable feedback signals depend on the evolution of wear-out phenomena and thermo-mechanical effects. Identifying mechanical failure causes, such as inadequate lubrication and slippage, is challenging, especially with multiple powertrain components.

Most bearing faults are due to improper lubrication rather than bearing fatigue. Slippage commonly occurs before permanent damage to the rolling elements and raceways. Slippage is detrimental to bearing performance and lifespan and may occur when load, speed, and/or lubrication conditions are inappropriate. Adequate lubrication and load are essential for optimal bearing performance at certain speeds. If these conditions are unmet, slippage causes rolling elements to slide on the raceways, leading to damage. To combat this, several manufacturers have introduced coated rollers or balls to improve friction and prevent slippage.

However, there is still a need for improvements in these regards.

### SUMMARY

A primary objective of embodiments herein is to address and improve various aspects for mechanical bearings. A specific objective is to provide means and methods for prolonging service life of mechanical bearings used in powertrains comprising electrical machines. Still another objective is to provide pro-active actions for preventing or at least mitigating wear-out effects on the mechanical bearings.

According to a first aspect, at least the primary objective is accomplished by a method according to claim 1 for prolonging service life of a bearing, such as a rolling element bearing, in a powertrain comprising an electrical machine. The method is performed in a control device controlling operation of the powertrain, and comprises:

- detecting that at least one feature of an acceleration signal from a vibration sensor within the powertrain violates a threshold limit, and
- determining a new operating area for the electrical machine in response to the detecting of the at least one feature violating the threshold limit.

According to the first aspect, a new operating area for the electrical machine may be determined when the signal, such as the acceleration signal, deviates from an expected, or normal, behaviour. In this way, problems arising due to, e.g., poor lubrication of the bearing, may be detected and mitigated at an early stage. The mitigation may be achieved by adjusting speed of the electrical machine, e.g., via a drive controlling output of the electrical machine, and/or by adjusting load on the electrical machine, such as by controlling a load powered by the electrical machine, to thereby compensate for the poor lubrication. Slippage may hence be avoided and vibrations reduced, whereby fatal damage of the bearing surface may be prevented. The mechanical bearing may thereby remain operational for a longer time until service is needed, at the cost of a temporarily reduced efficiency, and/or an altered production schedule.

Optionally, the method comprises:

- capturing features of the signal and storing them in a memory of the control device, and
- monitoring the features for a period of time,

wherein the detecting of the at least one feature violating the threshold limit comprises comparing the monitored features to one or more threshold limits. By monitoring the features for a period of time, robustness of the method may be improved. The one or more threshold limits may be set to values representing an acceptable vibrational behaviour of the powertrain or of the electrical machine, such as expressed in deviations from a baseline.

Optionally, the determining of a new operating area for the electrical machine comprises:

- altering one or more operating conditions of the electrical machine until a feedback signal from the vibration sensor settles below an upper limit, above a lower limit, or between the upper and lower limits, and
- determining the new operating area resulting in the feedback signal to be below the upper limit, above the lower limit or between the upper and the lower limits.

In this way, a new operating area resulting in reduced vibrations and/or slippage may be adequately identified. Preferably, the process should be repeated for several load and speed combinations, such that a new safe operating area may be determined by the control device.

Optionally, the one or more operating conditions comprise load and/or speed of the electrical machine. Load and speed may both affect the likelihood for slippage. Speed may be controlled via a drive of the electrical machine, whereas load may be controlled via a control unit configured to control a pump, a fan or similar of the powertrain, powered by the electrical machine, to apply a certain load.

Optionally, the method is executed in response to detecting that at least one feature of the signal increases or decreases without a change in load on and/or speed of the electrical machine. This may indicate that slippage occurs, and hence a fast detection of a possible bearing fault may be achieved.

Optionally, the method further comprises:

- capturing and storing one or more features of the signal during start-up or operation of the electrical machine, such as during normal operation of the electrical machine.

Hence, bearing faults may be detected and compensated for at any time during operation, not only at specific service occasions.

Optionally, the method further comprises:

- generating a warning signal in response to the detecting of the at least one feature violating the threshold limit.

In this way, an operator may be informed of the fault and take an appropriate action.

Optionally, the at least one feature of the signal is one or more of: root mean square of the signal values, mean peak frequency, kurtosis, and/or peak to peak frequency. These features of the signal, such as of the acceleration signal, are commonly used for various purposes. The root mean square of the acceleration signal values is a particularly useful metric for monitoring vibration. Furthermore, velocity and displacement are derivable from the acceleration signal and are sometimes provided as outputs from the vibration sensor. Corresponding feature(s) of a velocity output and/or a displacement output may be used for detecting violations of threshold limits defined in terms of velocity and/or displacement, respectively.

According to a second aspect there is presented a control device for prolonging service life of a bearing in a powertrain comprising an electrical machine, the control device being configured to control operation of the powertrain, and the control device being configured to:

- detect that at least one feature of a signal of a vibration sensor of the powertrain violates a threshold limit, and
- determine a new operating area for the electrical machine in response to the detecting of at least one feature violating the threshold limit.

The control device may be configured to perform the method of any one of the embodiments of the first aspect as described above. Advantages and advantageous embodiments are analogous to those described with reference to the first aspect. The control device may be an electric drive of the electrical machine, or it may be a higher-level control device controlling one or more loads powered by the electrical machine.

Optionally, the control device is configured to:

- capture features of the signal and storing them in a memory of the control device, and
- monitor the features for a period of time,

wherein the control device is configured to detect that the at least one feature violates the threshold limit by comparing the monitored features to one or more threshold limits.

Optionally, the control device is configured to determine the new operating area for the electrical machine by:

- altering one or more operating conditions of the electrical machine until a feedback signal from the vibration sensor settles below an upper limit, below a lower limit, or between the upper and lower limits, and
- determining the new operating area resulting in the feedback signal to be below the upper limit, above the lower limit or between the upper and the lower limits.

Optionally, the one or more operating conditions comprise load on and/or speed of the electrical machine.

Optionally, the control device is further configured to:

- capture and store one or more features of the signal during start-up or operation of the electrical machine.

According to a third aspect there is presented a computer program comprising computer code which, when run on processing circuitry of a control device for a powertrain comprising an electrical machine, causes the control device to perform the method according to the first aspect.

According to fourth aspect there is presented a computer program product comprising a computer program as above, and a computer readable storage medium on which the computer program is stored.

Other objectives, features and advantages of the enclosed embodiments will be apparent from the following detailed disclosure, from the attached dependent claims as well as from the drawings.

Generally, all terms used in the claims are to be interpreted according to their ordinary meaning in the technical field, unless explicitly defined otherwise herein. All references to "a/an/the element, apparatus, component, means, module, action, etc." are to be interpreted openly as referring to at least one instance of the element, apparatus, component, means, module, action, etc., unless explicitly stated otherwise. The actions of any method disclosed herein do not have to be performed in the exact order disclosed, unless explicitly stated.

## BRIEF DESCRIPTION OF THE DRAWINGS

The inventive concept is now described, by way of example, with reference to the accompanying drawings, in which:

Fig. 1 is a schematic diagram illustrating an electrical machine and a drive according to embodiments;

Figs. 2 and 3 are flowcharts of various aspects of methods according to embodiments;

Fig. 4 is a schematic diagram showing functional units of a drive according to an embodiment;

Fig. 5 is a schematic diagram showing functional modules of a drive according to an embodiment; and

Fig. 6 shows one example of a computer program product comprising computer readable means according to an embodiment.

## DETAILED DESCRIPTION

The inventive concept will now be described more fully hereinafter with reference to the accompanying drawings, in which certain embodiments of the inventive concept are shown. This inventive concept may, however, be embodied in many different forms and should not be construed as limited to the embodiments set forth herein; rather, these embodiments are provided by way of example so that this disclosure will be thorough and complete, and will fully convey the scope of the inventive concept to those skilled in the art. Like numbers refer to like elements throughout the description.

Briefly, the present teachings suggest determining a safe operating area for a powertrain comprising an electrical motor, by applying specific control commands in a control device controlling the powertrain. If authorized by a user, the drive alters the operating conditions until one or more feedback signals fall within predetermined thresholds. Under these new operating conditions, the system may still be operational for a long time and service properly. Detecting the specific type of fault may not be necessary if actions in the control device are taken prematurely and holistically, thereby improving the system health. Further, this approach may be extended to optimizing friction by automatically regulating the load and speed in the control device.

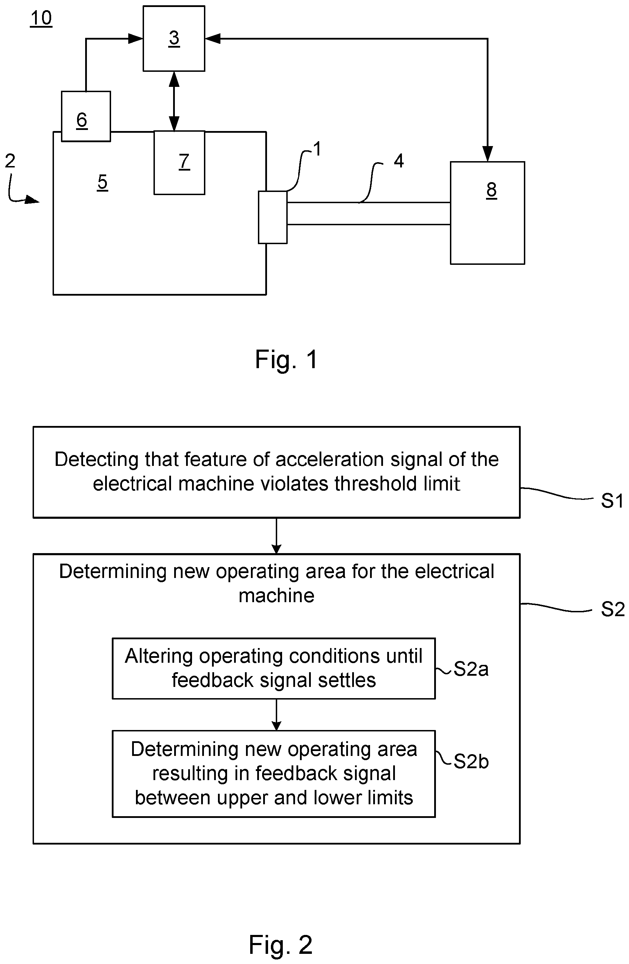

**Fig. 1** schematically illustrates an exemplary powertrain 10 comprising an electrical machine 2, controlled by an electric drive 7. The electrical machine 2 herein provides mechanical output power to drive a load 8, such as a pump, a fan, or similar, applying a load on the electrical machine 2. Several loads may be provided within the powertrain 10. A control device 3 is provided, which is configured to control operation of the powertrain 10, by communicating with at least the electric drive 7 of the electrical machine 2 and an electric control unit (not shown) of the load 8. The electrical machine 2 may, as in the illustrated example, be an electrical motor, but it may also be an electrical generator, or a motor-generator.

The powertrain 10 further comprises at least one bearing 1. The bearing 1 is a mechanical bearing, such as a rolling element bearing, e.g., a roller bearing or a ball bearing. In the illustrated example, the bearing 1 is provided to support a rotor or a rotatable shaft 4 of the electrical machine 2 against a housing 5 or another fixed component. Several such bearings 1 may be provided to support the shaft 4 at different locations along the shaft 4. In other examples, the at least one bearing may be provided at another location within the powertrain 10, such as in the load 8. The electric drive 7, also referred to as an electric controller, may be used for controlling the output of an electric machine 2 used, for example, to produce linear motion. The electric drive 7 may be provided separately from the electrical machine 2. In some embodiments, the electric drive 7 may be integrated with the control device 3. The drive 7 may accurately control the motor output and the motor response of the electric machine 2 against a controlling input, provided by the control device 3, by regulating rotational speed of the electrical machine 2. The control device 3 may hence be used to alter operating conditions in terms of load on and speed of the electrical machine 2 by controlling the rotational speed of the electrical machine 2 via the drive 7, and by controlling the mechanical load on the electrical machine 2 via the load 8, such as by controlling a valve of a pump, or similar. At least one vibration sensor 6, such as an accelerometer, is further provided to detect and measure vibrations occurring within the powertrain 10 and provide a signal, such as an acceleration signal to the control device 3. In the illustrated example, the vibration sensor 6 is mounted on the electrical machine 2, but in other examples it may be mounted at, e.g., the load 8, or at any another location within the powertrain 10 at which vibrations may occur.

**Fig. 2** illustrates a method for prolonging service life of a bearing in a powertrain 10, such as of the bearing 1 of the electrical machine 2 illustrated in Fig. 1. The method may be carried out in the control device 3 of the powertrain 10. It comprises the following actions:

**Action S1:** Detecting that at least one feature of a signal from the vibration sensor 6 violates a threshold limit, i.e., a predefined threshold limit. The signal from the vibration sensor 6, which is fed to the control device 3, is indicative of vibrations occurring within the powertrain 10. It may, e.g., be an acceleration signal. The at least one feature of the signal may be any statistical feature of the signal, such as one or more of: root mean square (RMS), mean peak frequency, kurtosis, and peak to peak frequency. The RMS of the acceleration signal can be determined according to

$$\mathrm{RMS} = \sqrt{\left(\frac{1}{n}\right)\sum_{i=1}^{n}(a_i)^2}$$

wherein $a_i$ are the measured acceleration values. Furthermore, as mentioned earlier, the at least one feature of the signal from the vibration sensor may be a corresponding feature of a derived quantity, such as of velocity and/or displacement.

**Action S2**: Determining a new operating area for the electrical machine 2 in response to the detecting of the at least one feature violating the threshold limit in the action $S_1$. The new operating area may herein be understood as an operating area in terms of rotational speed of and load on the electrical machine 2. The load on the electrical machine 2, originating from the load 8, will typically be translated to electric power, or electric current, or torque.

The determining of the new operating area for the electrical machine 2 in the action S2 may comprise the following actions:

**Action $S_2$a:** Altering one or more operating conditions of the powertrain 10 until a feedback signal, i.e., the signal from the acceleration sensor 6, settles within an upper limit and a lower limit. The upper limit and the lower limit may herein be determined in relation to a desired baseline.

**Action $S_2$b:** Determining the new operating area resulting in the feedback signal to be between the upper and the lower limits defined in the action S2a. In other words, the new operating area is determined to be the operating area, in terms of load and/or speed of the electrical machine 2, that results in a feedback signal from the acceleration sensor 6 being between defined upper and lower limits.

Once the new operating area has been determined, the control device 3 may control the powertrain 10, including the electrical machine 2 and the load 8, to operate within the new operating area, and/or it may provide information to a user relating to the new operating area, such that the user may decide whether to operate the electrical machine and/or the load 8 within the new operating area.

Hence, in order to mitigate effects of inadequate lubrication and slippage on mechanical bearings, in particular prior to surface damage, a method is provided in which specific control actions is taken in the control device 3. Regardless of whether or not wear has started to evolve or is about to happen with some certainty, the control device 3 may conduct an investigation process and take some control actions prematurely. In this way, the control device 3 explores in practice if any threshold limits of regular operation are violated or not, e.g., vibration content.

The method disclosed herein may be executed in response to detecting, by the control device 3, that at least one feature of the signal increases or decreases without a corresponding change in load on and/or speed of the electrical machine 2.

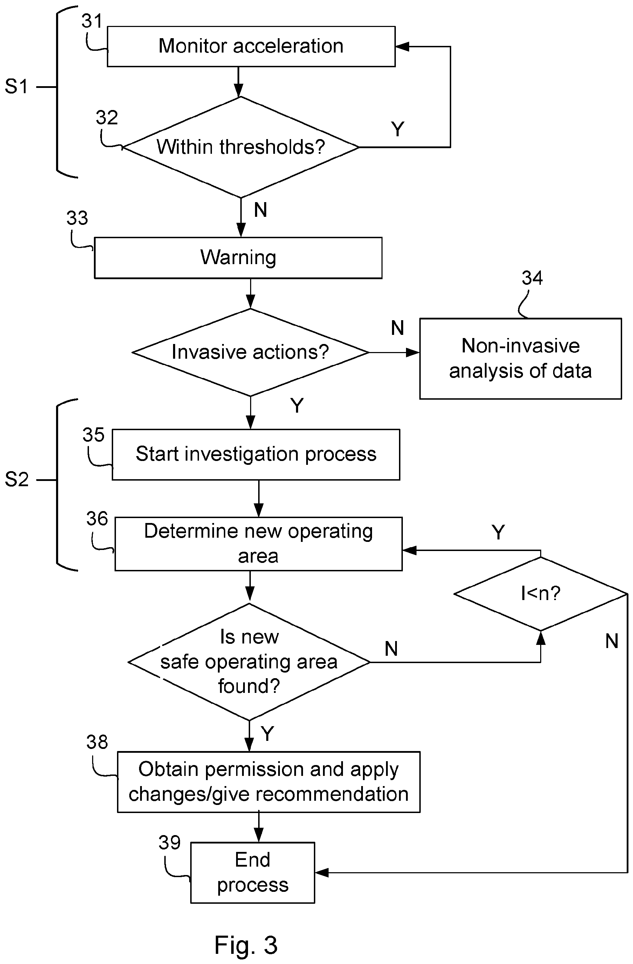

An exemplary method according to embodiments herein is illustrated in greater detail in **Fig. 3**.

According to the example, during start-up or normal operating conditions of the electrical machine, at least some features of the signal are captured by the vibration sensor 6 and stored in a memory of the control device 3. This capturing may be performed regularly. The control device 3 may, in an action 31, monitor the features of the signal for a period of time. In an action 32, it thereafter compares the monitored features to one or more threshold limits in order to detect if any feature violates the threshold limit(s), as described above with reference to the action S1 illustrated in Fig. 2. If all monitored features are within the threshold limit(s), the control device 3 may either continue to monitor the signal, or it may interrupt the process until it is initiated again at a later point in time. The features may, e.g., be monitored and analyzed periodically by the control device 3 during the execution of health diagnostic routines or regular operation.

If any one of the threshold limits is violated, the control device 3 may in the action 33 generate a warning signal, such as a warning to a user. If the control device 3 is authorized to take invasive actions, it may start an investigation process in an action 35. If not, it may proceed to a non-invasive analysis of data in an action 34, i.e., by online analysis of speed, load and the monitored features from the signal. The analysis may be used to provide recommendations to a user at a later point in time.

When the lubrication is inadequate, and slippage occurs, altering the speed and load has an immediate impact on the acceleration detected by the acceleration sensor 6, as proven by experimental tests. By perturbing system references, a new operating point is decided by the control device 3 (e.g., when the analyzed signals settle within the desired limits). By repeating this process for several load and speed combinations, new operating areas are in the action 36 determined by the control device 3. If there is no improvement in the vibration behaviour after n iterations I, i.e., if no safe operating area is found, then no further action is taken, and the process is ended in an action 39.

When a new safe operating area has been found, the control device 3 can in an action 38 apply or recommend the best alternative operating point in terms of vibration behaviour. The new operating point should be the closest one to a command set by the application requirements, without violating operational safety limits. The process is ended in the action 39.

The proposed solution has been experimentally tested with a bearing with improper lubrication, i.e., a healthy bearing has been partially or fully degreased. The used experimental setup contains two electrical machines in the form of induction machines, coupled by the means of a torque sensor. A 15kW test motor is fed by a two-quadrant ACS880-01 drive, whereas a 22kW load motor is supplied by a four-quadrant ACS880-11 drive. The test motor is equipped with several acceleration sensors and the acceleration signals are captured at $50\mu s$ sampling period.

At certain speeds n (n $\leq$ 50% of nominal speed) and loads T (T > 75% of nominal load), the acceleration signal in terms of RMS and mean peak frequency was comparable with that of an adequately greased bearing. Hence, although the lubricant had been removed, there was no change in the vibration content in the above-mentioned ranges of speed n and loads T. With other speed and load combinations, the acceleration increased to higher levels and violated the set threshold limits, intermittently or continuously. This is a typical behavior when slippage takes place. When the threshold limits are violated, the drive starts to perturb the speed and load references by a certain percentage of the nominal values. It assesses the operating points by means of vibration content. In the experimental tests, it has been found that a speed decrease, or a load increase, or their combination, assists in avoiding slippage and keeping the vibration content low. Slippage appears when friction is insufficient between rolling element and raceway. When no action was taken against slippage, the bearing surface was fatally damaged. When action in the form of altered operating conditions is taken, the system remains operational for a longer time before a failure occurs or until service is planned. Although the method has been validated against inadequately lubricated bearings, the method as disclosed herein may also be used to act against other causes of similar nature or to optimize the friction of the bearing.

The proposed diagnostic and prescriptive routine has been validated by performing tests in a 15kW electric motor supplied by an ACS880 drive. To shorten the duration of the testing process, the lubricant has been partially removed from a non-drive end bearing in the form of a rolling element bearing. The motor has been operated under various speed and load conditions of 25% step changes, and the three-dimensional acceleration of both the drive end (DE) and the non-drive end (NDE) of the motor has been recorded, among others. The RMS and mean peak frequency of the acceleration signal at the DE and the NDE in the X, Y, and Z directions, respectively, in all tests, are summarized in the following tables 1-10.

Table 1. RMS acceleration [$m/s^2$] - (0% load).

|            | NDEX | NDEY | NDEZ | DEX | DEY | DEZ |
|------------|------|------|------|-----|-----|-----|
| 25% speed  | 1.7  | 2.5  | 3.3  | 1.7 | 2.0 | 2.5 |
| 50% speed  | 2.2  | 3.7  | 6.7  | 2.5 | 3.2 | 4.9 |
| *75% speed*  | *11.7* | *10.2* | *14.7* | *4.6* | *6.3* | *8.6* |
| *100% speed* | *15.1* | *13.0* | *19.1* | *5.8* | *7.7* | *11.6* |

Table 2. RMS acceleration [$m/s^2$] - (25% load).

|  | NDEX | NDEY | NDEZ | DEX | DEY | DEZ |
|---|---|---|---|---|---|---|
| 25% speed | 3.0 | 4.9 | 4.4 | 2.5 | 3.7 | 4.1 |
| 50% speed | 3.9 | 6.8 | 7.0 | 3.4 | 5.3 | 6.7 |
| *75% speed* | *11.9* | *11.1* | *14.6* | *4.9* | *7.2* | *9.6* |
| *100% speed* | *15.2* | *13.2* | *17.5* | *5.4* | *8.1* | *11.0* |

Table 3. RMS acceleration [$m/s^2$] - (50% load).

|  | NDEX | NDEY | NDEZ | DEX | DEY | DEZ |
|---|---|---|---|---|---|---|
| 25% speed | 3.6 | 6.3 | 4.2 | 2.8 | 4.4 | 4.0 |
| 50% speed | 4.5 | 8.5 | 6.1 | 3.6 | 6.0 | 6.2 |
| 75% speed | 4.3 | 8.0 | 10.6 | 4.0 | 6.2 | 8.7 |
| *100% speed* | *15.3* | *13.5* | *18.8* | *5.7* | *8.4* | *11.8* |

Table 4. RMS acceleration [$m/s^2$] - (75% load).

|  | NDEX | NDEY | NDEZ | DEX | DEY | DEZ |
|---|---|---|---|---|---|---|
| 25% speed | 4.2 | 7.5 | 4.6 | 3.2 | 5.0 | 4.3 |
| 50% speed | 5.0 | 9.8 | 6.0 | 3.9 | 6.7 | 6.2 |
| 75% speed | 4.6 | 8.7 | 10.4 | 3.9 | 7.0 | 8.9 |
| *100% speed* | *15.3* | *13.7* | *19.0* | *5.8* | *8.8* | *12.4* |

Table 5. RMS acceleration [$m/s^2$] - (100% load).

|  | NDEX | NDEY | NDEZ | DEX | DEY | DEZ |
|---|---|---|---|---|---|---|
| 25% speed | 3.5 | 7.8 | 3.9 | 2.9 | 5.0 | 3.7 |
| 50% speed | 5.6 | 11.0 | 6.5 | 4.3 | 7.8 | 6.6 |
| 75% speed | 5.1 | 9.4 | 10.4 | 4.1 | 7.4 | 8.7 |
| 100% speed | 4.3 | 7.8 | 14.8 | 4.8 | 7.8 | 12.3 |

Table 6. Mean peak frequency [Hz] - (0% load).

|  | NDEX | NDEY | NDEZ | DEX | DEY | DEZ |
|---|---|---|---|---|---|---|
| 25% speed | 5236.9 | 4454.6 | 4414.0 | 4441.1 | 4540.7 | 4450.5 |
| 50% speed | 4497.7 | 4425.2 | 4429.9 | 4433.8 | 4568.3 | 4465.8 |
| *75% speed* | *6956.6* | *4228.3* | *4423.1* | *4350.8* | *4272.4* | *4448.0* |
| *100% speed* | *6883.2* | *4325.9* | *4417.9* | *4405.1* | *4506.4* | *4442.2* |

Table 7. Mean peak frequency [Hz] - (25% load).

|  | NDEX | NDEY | NDEZ | DEX | DEY | DEZ |
|---|---|---|---|---|---|---|
| 25% speed | 4638.9 | 4535.8 | 4413.8 | 4495.5 | 4569.4 | 4504.4 |
| 50% speed | 4657.5 | 4553.1 | 4411.6 | 4499.7 | 4635.5 | 4486.9 |
| *75% speed* | *6331.6* | *4414.8* | *4412.0* | *4366.6* | *4485.3* | *4456.3* |
| *100% speed* | *7306.6* | *4381.4* | *4404.9* | *4379. 7* | *4670.2* | *4515.9* |

Table 8. Mean peak frequency [Hz] - (50% load).

|  | NDEX | NDEY | NDEZ | DEX | DEY | DEZ |
|---|---|---|---|---|---|---|
| 25% speed | 4674.3 | 4550.5 | 4490.4 | 4546.7 | 4588.2 | 4575.9 |
| 50% speed | 4749.9 | 4567.2 | 4409.9 | 4572.8 | 4667.3 | 4522.7 |
| 75% speed | 4576.6 | 4490.8 | 4403.9 | 4434.1 | 4592.8 | 4464.8 |
| *100% speed* | *7089.5* | *4400.0* | *4407.7* | *4413.3* | *4630.3* | *4490.3* |

Table 9. Mean peak frequency [Hz] - (75% load).

|  | NDEX | NDEY | NDEZ | DEX | DEY | DEZ |
|---|---|---|---|---|---|---|
| 25% speed | 4686.3 | 4550.2 | 4553.3 | 4576.1 | 4605.1 | 4615.2 |
| 50% speed | 4784.2 | 4561.4 | 4434.9 | 4604.0 | 4692.3 | 4560.3 |
| 75% speed | 4692.9 | 4493.6 | 4393.2 | 4447.9 | 4609.8 | 4478.3 |
| *100% speed* | *7033.2* | *4455.7* | *4401.6* | *4421.3* | *4643.3* | *4493.9* |

Table 10. Mean peak frequency [Hz] - (100% load).

|  | NDEX | NDEY | NDEZ | DEX | DEY | DEZ |
|---|---|---|---|---|---|---|
| 25% speed | 3992.1 | 3975.0 | 4098.9 | 4346.6 | 3877.7 | 3891.0 |
| 50% speed | 4775.8 | 4560.3 | 4473.9 | 4619.8 | 4722.6 | 4567.7 |
| 75% speed | 4746.9 | 4515.9 | 4390.3 | 4463.9 | 4630.1 | 4487.3 |
| 100% speed | 4566.7 | 4422.2 | 4395.9 | 4422.3 | 4628.7 | 4503.9 |

There are some particular operating points, marked using *italics* in the tables, in which the vibration content is significantly higher than that of the normal operation. The vibration content increased intermittently in some of the operating points, whereas in others, it remained continuously high. Both the RMS and the mean peak frequency of the acceleration signal are significantly large during those intervals, as can be seen in the given tables. This is a characteristic behavior of slippage. When rotational speeds and loads are unsuitable, and lubrication is inadequate, very distinct heating zones develop in the raceway where, in turn, incipient cracks may arise when cycling continues.

Table 11. Horizontal axis (load) - vertical axis (speed).

| speed \ load | 0% | 25% | 50% | 75% | 100% |
|---|---|---|---|---|---|
| 25% |  |  |  |  |  |
| 50% |  |  |  |  |  |
| 75% | x | x |  |  |  |
| 100% | x | x | x | x |  |

As a response to the change of the vibration content, the control device regulates the speed and load in order for the friction and drag force to be appropriate and reduce the vibration. In Table 11, it is shown that the electrical machine should avoid operating in the areas marked with an x.

The experimental results of this study only serve the purposes of illustrating the effectiveness of the concept. It cannot be known a-priori if slippage or other similar phenomena will appear in a certain operating point. These phenomena are of stochastic nature; therefore, there is a need that the drive should re-assess the operating conditions continuously.

The control device should have the capability of dynamically regulating and adjusting the operating conditions based on the feedback from the acceleration sensors, in this case, or any other similar type of sensor. Also, the conditions could be re-evaluated by the drive at certain time intervals based on the application needs. This is only possible to perform using the control device, and cannot be done manually by a user. In specific time intervals, the control device could perturb the system to verify if the conditions have changed, and if so, the normal operation may be restored. Finally, in the conducted study, the speed and load steps were of 25% of the nominal values; however, they can be further fine-tuned in real time by the control device (e.g., smaller steps of change).

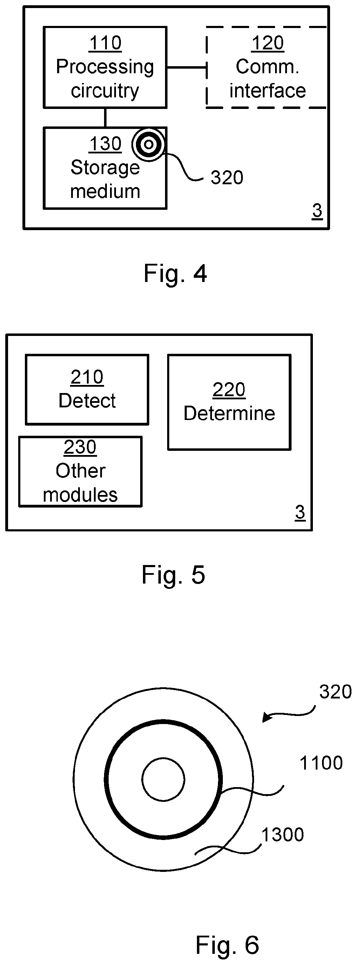

**Fig. 4** schematically illustrates, in terms of a number of functional units, the components of a control device 3 according to an embodiment. Processing circuitry 110 is provided using any combination of one or more of a suitable central processing unit (CPU), multiprocessor, microcontroller, digital signal processor (DSP), etc., capable of executing software instructions stored in a computer program product 320 (as in Fig. 6), e.g., in the form of a storage medium 130. The processing circuitry 110 may further be provided as at least one application specific integrated circuit (ASIC), or field programmable gate array (FPGA).

Particularly, the processing circuitry 110 is configured to cause the control device 3 to perform a set of operations, or actions, as disclosed above. For example, the storage medium 130 may store the set of operations, and the processing circuitry 110 may be configured to retrieve the set of operations from the storage medium 130 to cause the device 20 to perform the set of operations. The set of operations may be provided as a set of executable instructions. The processing circuitry 110 is thereby arranged to execute methods as herein disclosed.

The storage medium 130 may also comprise persistent storage, which, for example, can be any single one or combination of magnetic memory, optical memory, solid state memory or even remotely mounted memory.

The control device 3 may further comprise a communications interface 120 for communications with other entities, functions, nodes, and devices, over suitable interfaces. As such the communications interface 120 may comprise one or more transmitters and receivers, comprising analogue and digital components.

The processing circuitry 110 controls the general operation of the control device 3 e.g., by sending data and control signals to the communications interface 120 and the storage medium 130, by receiving data and reports from the communications interface 120, and by retrieving data and instructions from the storage medium 130.

Other components, as well as the related functionality, of the control device 3 are omitted in order not to obscure the concepts presented herein.

**Fig. 5** schematically illustrates, in terms of a number of functional modules, the components of a control device 3 according to an embodiment. The control device 3 of Fig. 5 comprises a number of functional modules: a detection module 210 configured to detect that at least one feature of a signal of the electrical machine 2 violates a threshold limit, and a determination module 220 configured to determine a new operating area for the electrical machine 2 in response to the detecting of at least one feature violating the threshold limit. The control device 3 may further comprise a number of optional modules 230 configured to perform the actions described above with reference to Figs. 2-3. In general terms, each functional module 210 - 230 may be implemented in hardware or in software. Preferably, one or more or all functional modules 210 - 230 may be implemented by the processing circuitry 110, possibly in cooperation with the communications interface 120 and the storage medium 130. The processing circuitry 110 may thus be arranged to from the storage medium 130 fetch instructions as provided by a functional module 210 - 230 and to execute these instructions, thereby performing any actions of the device 20 as disclosed herein.

**Fig. 6** shows one example of a computer program product 320 comprising computer readable means 1300. On this computer readable means 1300, a computer program 1100 can be stored, which computer program 1100 can cause the processing circuitry 110 and thereto operatively coupled entities and devices, such as the communications interface 120 and the storage medium 130, to execute methods according to embodiments described herein. The computer program 1100 and/or computer program product 320 may thus provide means for performing any actions of the control device 3 as herein disclosed.

In the example of Fig. 6, the computer program product 320 is illustrated as an optical disc, such as a CD (compact disc) or a DVD (digital versatile disc) or a Blu-Ray disc. The computer program product 320 could also be embodied as a memory, such as a random access memory (RAM), a read-only memory (ROM), an erasable programmable read-only memory (EPROM), or an electrically erasable programmable read-only memory (EEPROM) and more particularly as a non-volatile storage medium of a device in an external memory such as a USB (Universal Serial Bus) memory or a Flash memory, such as a compact Flash memory. Thus, while the computer program 1100 is here schematically shown as a track on the depicted optical disk, the computer program 1100 can be stored in any way which is suitable for the computer program product 320.

The inventive concept has mainly been described above with reference to a few embodiments. However, as is readily appreciated by a person skilled in the art, other embodiments than the ones disclosed above are equally possible within the scope of the inventive concept, as defined by the appended patent claims.

**Claims**

1. A method for prolonging service life of a bearing (1) in a powertrain (10) comprising an electrical machine (2), the method being performed in a control device (3) controlling operation of the powertrain (10), the method comprising:

- detecting (Si) that at least one feature of a signal from a vibration sensor (4) within the powertrain (10) violates a threshold limit, and
- determining (S2) a new operating area for the electrical machine (2) in response to the detecting (Si) of the at least one feature violating the threshold limit.

2. The method as claimed in claim 1, comprising:

- capturing features of the signal and storing them in a memory of the control device (3), and
- monitoring (31) the features for a period of time,

wherein the detecting (Si) of the at least one feature violating the threshold limit comprises comparing the monitored features to one or more threshold limits.

3. The method as claimed in any of the preceding claims, wherein the determining (S2) of a new operating area for the electrical machine (2) comprises:

- altering (S2a) one or more operating conditions of the electrical machine (2) until a feedback signal from the vibration sensor (6) settles below an upper limit, above a lower limit or between the upper and lower limits, and
- determining (S2b) the new operating area resulting in the feedback signal to be below the upper limit, above the lower limit or between the upper and the lower limits.

4. The method as claimed in claim 3, wherein the one or more operating conditions comprise load on and/or speed of the electrical machine (2).

5. The method as claimed in any of the preceding claims, being executed in response to detecting that at least one feature of the signal increases or decreases without a change in load on and/or speed of the electrical machine (2).

6. The method as claimed in any of the preceding claims, further comprising:

- capturing and storing one or more features of the signal during start-up or operation of the electrical machine (2).

7. The method as claimed in any of the preceding claims, further comprising:

- generating (33) a warning signal in response to the detecting (12) of the at least one feature violating the threshold limit.

8. The method as claimed in any of the preceding claims, wherein the at least one feature of the signal is one or more of: root mean square of the signal values, mean peak frequency, kurtosis, peak to peak frequency.

9. A control device (3) for prolonging service life of a bearing (1) in a powertrain (10) comprising an electrical machine (2), the control device (3) being configured to control operation of the powertrain (10), and the control device (3) being configured to:

- detect that at least one feature of a signal from a vibration sensor within the powertrain (10) violates a threshold limit, and
- determine a new operating area for the electrical machine (2) in response to the detecting of at least one feature violating the threshold limit.

10. The control device (3) as claimed in claim 9, the control device (3) being configured to:

- capture features of the signal and storing them in a memory of the control device (3), and
- monitor the features for a period of time,

wherein the control device (3) is configured to detect that the at least one feature violates the threshold limit by comparing the monitored features to one or more threshold limits.

11. The control device (3) as claimed in claim 9 or 10, wherein the control device (3) is configured to determine the new operating area for the electrical machine (2) by:

- altering one or more operating conditions of the electrical machine (2) until a feedback signal from the vibration sensor 6 settles below an upper limit, above a lower limit or between the upper and the lower limits, and
- determining the new operating area resulting in the feedback signal to be below the upper limit, above the lower limit or between the upper and the lower limits.

12. The control device (3) as claimed in claim 11, wherein the one or more operating conditions comprise load on and/or speed of the electrical machine (2).

13. The control device (3) as claimed in any of claims 9-12, wherein the control device (3) is further configured to:

- capture and store one or more features of the signal during start-up or operation of the electrical machine (2).

14. A computer program (1100) comprising computer program code which, when run on processing circuitry (110) of a control device (3) for a powertrain (10) comprising an electrical machine (2), causes the control device (3) to perform the method of any one of claims 1-9.

15. A computer program product (320) comprising a computer program (1100) according to claim 14, and a computer readable storage medium (320) on which the computer program (1100) is stored.

10

Fig. 1

Detecting that feature of acceleration signal of the electrical machine violates threshold limit

S1

Determining new operating area for the electrical machine

S2

Altering operating conditions until feedback signal settles

S2a

Determining new operating area resulting in feedback signal between upper and lower limits

S2b

Fig. 2

Fig. 3

110
Processing
circuitry

120
Comm.
interface

130
Storage
medium

320

3

Fig. 4

210
Detect

220
Determine

230
Other
modules

3

Fig. 5

320

1100

1300

Fig. 6

**EUROPEAN SEARCH REPORT**

Application Number

EP 24 18 4864

## DOCUMENTS CONSIDERED TO BE RELEVANT

| Category | Citation of document with indication, where appropriate, of relevant passages | Relevant to claim |
|---|---|---|
| X | US 2023/393023 A1 (KAKOSIMOS PANAGIOTIS [SE] ET AL) 7 December 2023 (2023-12-07) * paragraphs [0018], [0019], [0091]; claims 1-4; figures 2,3 * ----- | 1-15 |
| A | JP 2009 030470 A (MAZDA MOTOR) 12 February 2009 (2009-02-12) * claims * ----- | 1-15 |

**CLASSIFICATION OF THE APPLICATION (IPC)**

INV.
G01M13/045
F16C19/52
H02P7/00

**TECHNICAL FIELDS SEARCHED (IPC)**

G01M
F16C
H02P
B60L

The present search report has been drawn up for all claims

| Place of search | Date of completion of the search | Examiner |
|---|---|---|
| The Hague | 20 November 2024 | Cilissen, Marcel |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 18 4864

This annex lists the patent family members relating to the patent documents cited in the above-mentioned European search report.
The members are as contained in the European Patent Office EDP file on
The European Patent Office is in no way liable for these particulars which are merely given for the purpose of information.

20-11-2024

| Patent document cited in search report | Publication date | Patent family member(s) | | Publication date |
|---|---|---|---|---|
| US 2023393023 A1 | 07-12-2023 | CN | 116348826 A | 27-06-2023 |
| | | EP | 3989024 A1 | 27-04-2022 |
| | | US | 2023393023 A1 | 07-12-2023 |
| | | WO | 2022084384 A1 | 28-04-2022 |
| JP 2009030470 A | 12-02-2009 | NONE | | |

EPO FORM P0459

For more details about this annex : see Official Journal of the European Patent Office, No. 12/82